# EUROPÄISCHE PATENTSCHRIFT

(11) **EP 2 399 846 B1**
(45) Veröffentlichungstag und Bekanntmachung des Hinweises auf die Patenterteilung: **17.02.2016**
(21) Anmeldenummer: 11168978.2
(22) Anmeldetag: 07.06.2011
(51) Int. Cl.: B65D 83/00, F15B 15/14, F16J 1/00, B05C 17/005

(54) **Kartusche mit Kartuschenkolben**
Cartridge with cartridge piston
Cartouche et piston pour cartouche

(30) Priorität: 22.06.2010 DE 102010024615; 12.10.2010 DE 102010048062
(43) Veröffentlichungstag der Anmeldung: 28.12.2011
(73) Patentinhaber: Fischbach KG Kunststoff-Technik, 51766 Engelskirchen (DE)
(72) Erfinder: Helmenstein, Achim, 51766 Engelskirchen (DE)
(74) Vertreter: von Kreisler Selting Werner - Partnerschaft von Patentanwälten und Rechtsanwälten mbB

(56) Entgegenhaltungen:
- EP-A1- 1 845 033
- EP-A1- 2 108 599
- DE-U1- 8 815 089
- GB-A- 2 259 738

## Beschreibung

Die vorliegende Erfindung betrifft einen Kartuschenkolben mit einem rohrförmigen Kartuschenkörper, der eine umlaufende Seitenwand hat, und an seinem vorderen Ende mit einer Kolbenbrust verschlossen ist, wobei an der Seitenwand mindestens eine flexible Dichtlippe vorgesehen ist, in Kombination mit einer Kartusche.

Kartuschen für auspressbare Massen, wie beispielsweise Dicht- oder Füllmassen, bestehen aus einem rohrförmigen Kartuschenkörper, in den die Masse eingefüllt wird. Der Kartuschenkörper ist am vorderen Ende geschlossen und das Einfüllen der Masse erfolgt vom offenen rückwärtigen Ende her. Anschließend wird der Kolben ebenfalls vom rückwärtigen Ende her in den Kartuschenkörper eingeführt um diesen abzudichten.

Ein Kartuschenkolben von dem der Oberbegriff des Patentanspruchs 1 ausgeht, ist beschrieben in EP 1 845 033 A1 (Fischbach). Der Kolben weist zwei flexible Dichtlippen auf, die an der Wand des Kartuschenkörpers entlang streichen und den die auspressbare Masse enthaltenden Raum gegen die Umgebung abdichten. Eine vordere Dichtlippe ist mit Durchbrüchen versehen, durch die beim Setzten des Kolbens, d. h. beim Einführen des Kolbens in die Kartusche, Luft entweichen kann. An der hinteren Lippe befinden sich Diskontinuitäten, so dass die hintere Lippe nicht vollflächig an der Innenfläche der Kartusche anliegen kann. In Folge der Diskontinuitäten kann Luft über die hintere Dichtlippe hinweg entweichen.

Das Setzen des Kolbens erfolgt in einer Maschine mit relativ hoher Geschwindigkeit. Dadurch wird vorübergehend ein erhöhter Druck in dem Raum vor der Kolbenbrust erzeugt und dieser Druck muss an der Dichtlippe vorbei und entlang der Seitenwand des Kolbens ins Freie entweichen.

Ein Problem besteht darin, dass dieser Luftweg einen hohen Strömungswiderstand bietet weil die Diskontinuitäten nur einen kleinen Öffnungsquerschnitt freilassen. Dies führt dazu, dass im weiteren Verlauf des Luftweges entlang der Seitenwand des Kolbens nicht genügend Druck zur Verfügung steht, um die Luft abzulassen. An der Seitenwand des Kolbens befinden sich erhabene umlaufende Ringe, die an der Kartuscheninnenwand anliegen, und die von der schwachen Luftströmung nicht überwunden werden können. Als Folge hiervon verbleibt ein Teil der Luft im Bereich des Kolbens an dessen Außenseite oder auch vor der Kolbenbrust eingeschlossen innerhalb der Kartusche. Für den Fall, dass die Diskontinuitäten weniger stark ausgeprägt sind, besteht auch die Möglichkeit, den Kolben schräg in die Kartusche einzuführen und ein Vorbeiströmen der Luft an der Dichtlippe zu ermöglichen. Aber auch hier bewirkt das Anliegen der Kolbenseitenwand an der Kartuscheninnenwand eine Reduzierung der Entlüftungsströmung. In Folge dieser Restluft vor dem Kolben neigt die auspressbare Masse dazu, in der Kartusche zu erhärten und zu verderben. Außerdem führen Luftblasen vor der Kolbenbrust während des Auspressvorgangs der Kartusche zu unerwünschten Unterbrechungen des ausgepressten Füllgutstranges.

Der Erfindung liegt die Aufgabe zugrunde, eine Kartusche mit einem Kartuschenkolben der eingangs genannten Art zu schaffen, der beim Setzen des Kolbens eine bessere Entlüftung ermöglicht.

Die erfindungsgemäße Kombination von Kartusche und Kartuschenkolben ist durch den Patentanspruch 1 definiert. Erfindungsgemäß kann die Seitenwand des Kolbenkörpers beispielsweise an ihrem rückwärtigen Ende einen unrunden Wandabschnitt aufweisen, dessen auf die Längsmittelachse bezogener Radiant in Umfangsrichtung variiert.

Der Radiant ist ein Strahl in einer rechtwinklig zu der Längsmittelachse verlaufenden Ebene, der von der Längsmittelachse ausgeht und an dem Wandabschnitt des Kolbens endet. Die Größe des Radianten ist die Länge dieses Strahls. An denjenigen Stellen des Umfanges, an denen der Radiant klein ist, streicht die Luft beim Setzen des Kolbens leichter entlang als an denjenigen Stellen, an denen der Radiant groß ist. Somit werden längslaufende Luftwege mit verringertem Luftwiderstand erzeugt. Durch die unrunde Ausbildung des. Wandabschnitts der Seitenwand wird erreicht, dass die Außenfläche des Kolbens in einigen Bereichen des Umfangs größer ist als die Innenfläche des Kartuschenkörpers, während sie in anderen Bereichen kleiner ist. Im Mittel ist der Außendurchmesser des Kolbens größer als der Innendurchmesser des Kartuschenkörpers. Dadurch wird erreicht, dass im stationären Zustand der am Ende des Setzvorganges erreicht ist, durch Materialverschiebung ein Ausgleich über den Umfang des Kolbens erfolgt, so dass nach einer Übergangszeit der Kolben an allen Stellen seines Umfangs mit Vorspannung an der Kartuschenwand anliegt. Der Umfang des Kolbens und der Innenumfang der Kartusche schmiegen sich dann gegenseitig aneinander an. Dadurch ist sichergestellt, dass während des Lagerzustands keine Luft in die Kartusche eindringen kann.

Vorzugsweise ist vorgesehen, dass der unrunde Wandabschnitt zumindest teilweise durch einen umlaufenden Rand gebildet ist.

Vorzugsweise hat der unrunde Rand in Umfangsrichtung an allen Stellen die gleiche Wanddicke. Dies bedeutet auch die Vermeidung längslaufender Nuten, durch die Luft in das Innere der Kartusche eindringen könnte.

Die Erfindung ermöglicht die Verwendung kleiner Luftdurchlässe an der flexiblen Dichtlippe. Solche kleinen Luftdurchlässe ermöglichen das Durchströmen von Luft, halten aber auspressbare Masse im Wesentlichen zurück, so dass die auspressbare Masse die Dichtlippe nicht überwinden kann. Ein nachteiliger Effekt der engen Luftdurchlässe besteht darin, dass die Luftströmung verlangsamt wird und nicht schnell genug an der hinteren elastisch an der Kartuscheninnenwand anliegenden Kolbenwand vorbei aus der Kartusche ausströmen kann. Dieser Effekt wird durch die Unrundheit der Kolbenwand vorrübergehend beseitigt indem kurzzeitig ein Spalt zwischen Kolbenwand und Kartuschenwand gebildet wird. Ein wesentlicher Vorteil besteht dadurch, dass das Setzen des Kolbens auch mit großer Geschwindigkeit erfolgen kann, ohne dass die Gefahr des Austretens auspressbarer Masse am Kolben vorbei besteht, und ohne dass die Gefahr von Lufteinschlüssen in dem Raum vor dem Kolben besteht.

Gemäß einer bevorzugten Ausgestaltung der Erfindung ist vor der Dichtlippe an dem Kolben ein relativ zu der Dichtlippe starrer Schutzrand angeordnet, der mindestens eine Durchbrechung aufweist. Der Schutzrand bildet eine Art Schirm als mechanische Schutzvorrichtung für die empfindliche Dichtlippe. Er befindet sich in axialem Abstand von der Dichtlippe. Wenn mehrere Durchbrechungen vorgesehen sind, bilden diese großflächige Durchlässe, um beim Setzen des Kolben die entweichende Luft an dem Schutzrand vorbeizuleiten. Die Luftdurchlässe an der Dichtlippe haben in ihrer Gesamtheit einen Strömungswiderstand, der größer ist als derjenige, der Gesamtheit der Durchbrechungen. Dadurch wird bewirkt, dass die auspressbare Masse zwar die Durchbrechungen des Schutzrandes passieren kann, jedoch nicht die kleineren Luftdurchlässe. Die Bewegung der Masse längs des Kolbens endet also an der Dichtlippe.

Gemäß einer weiter bevorzugten Ausführungsform sind wenigstens einige Durchbrechungen in dem Schutzrand umfangsmäßig wechselseitig versetzt zu den Luftdurchlässen an der Dichtlippe angeordnet, so dass der Schutzrand auch ein Schutz für die Luftdurchlässe in der Dichtlippe an dieser Stelle darstellt. Die Masse strömt zuerst durch die Unterbrechungen im Schutzrand, umströmt im Anschluss den Schutzrand und strömt zum Schluss zu den Luftdurchlässen an der Dichtlippe. Würde die Masse schon früher, wenn noch nicht der wesentliche Teil der Lufteinschlüsse vor dem Kolben entwichen ist, an die Luftdurchlässe der Dichtlippe strömen, so würde die Masse diese frühzeitig verschließen und Restluft verbliebe vor der Kolbenbrust. Es kann auch vorgesehen sein, dass mindestens eine Durchbrechung versetzt zu den Luftdurchlässen angeordnet ist.

Die Luftdurchlässe der Dichtlippe können Löcher in der Dichtlippe sein, durch Aussparungen am freien Ende der Dichtlippe oder durch eine umfangsmäßig unregelmäßige Ausbildung des freien Endes der Dichtlippe gebildet sein. Bei einer bevorzugten Ausführungsform der Erfindung sind die Durchlässe in einem Wulstrand am Ende der Dichtlippe als wulstlose Bereiche vorgesehen. Während der Wulstrand an der Kartuschenwand abdichtend anliegt, können die wulstlosen Bereiche von der Luft passiert werden.

Der unrunde Wandabschnitt der Seitenwand kann die Form eines Polygons haben. Ein Polygon ist in diesem Sinne dadurch definiert, dass es mehrere (zwei oder mehr) Ecken hat, wobei die Ecken gerundet sind. Auch eine Version mit nur einer Ecke wäre prinzipiell möglich.

Die Seitenwand kann außen erhabene umlaufende Ringe aufweisen. Diese Ringe verhindern eine großflächige Anlage der Seitenwand an der Innenwand eines Kartuschenkörpers, in der der Kartuschenkolben eingeführt ist. Dabei kann vorgesehen sein, dass die erhabenen umlaufenden Ringe als flexible Lippen ausgebildet sind. Die flexiblen Lippen legen sich in besonders vorteilhafter Weise an die runde Formgestalt der Kartusche an.

In einem besonders bevorzugten Ausführungsbeispiel ist vorgesehen, dass die erhabenen umlaufenden Ringe an dem unrunden Wandabschnitt ausgebildet sind. Insbesondere wenn bei einem derartig erfindungsgemäß ausgestalteten Kartuschenkolben die erhabenen Ringe als flexible Lippen ausgebildet sind, wird in vorteilhafter Weise eine Anpassung des Kartuschenkolbens an die runde Formgestalt der Kartusche ermöglicht, wobei gleichzeitig eine großflächige Anlage der Seitenwand an die Innenwand des Kartuschenkörpers verhindert wird.

In einem Ausführungsbeispiel der Erfindung kann vorgesehen sein, dass der Kartuschenkolben zumindest teilweise aus Polyamid oder Polyolefin, vorzugsweise Polyethylen oder Polypropylen, besteht. Die Erfindung sieht somit vor, dass der rohrförmige Kolbenkörper, die Kolbenbrust, die Seitenwand und/oder die flexible Dichtlippe aus einem dieser Materialien bestehen. Insbesondere die Verwendung von weichen Polyethylen ist von Vorteil, da dieses flexibler ist als das üblicherweise bei Kartuschen verwendete Rohmaterial. Dadurch schmiegt sich der Kartuschenkolben in vorteilhafter Weise an die Kartuschenoberfläche an und dichtet gut ab. Der Kartuschenkolben kann somit vollständig oder teilweise aus den genannten Materialien bestehen.

Erfindungsgemäß kann ferner vorgesehen sein, dass der Radiant des Außenumfangs des unrunden Wandabschnitts des Kolbens an einigen Stellen größer und an anderen Stellen kleiner als der Radius des Innenumfangs der Kartusche ist. Hierdurch wird erreicht, dass während des Setzens des Kolbens, das sich über eine kurze Zeit erstreckt, der Kolben nicht gegenüber der Kartuschenwand abdichtet, so dass Luft an ihm vorbei entweichen kann. Danach wird der Kartuschenkolben durch die einzwängende Wirkung der Kartusche derart deformiert, dass er abdichtend und passend den Innenumfang der Kartusche ausfüllt.

Es ist somit ein Kartuschenkolben mit einem rohrförmigen Kartuschenkörper vorgesehen, der eine umlaufende Seitenwand hat und an seinem vorderen Ende mit einer Kolbenbrust verschlossen ist, wobei an der Seitenwand mindestens eine flexible Dichtlippe vorgesehen ist, die vorzugsweise Luftdurchlässe aufweist. Bei diesem Kolben ist vor der mindestens einen Dichtlippe ein die Dichtlippe mindestens teilweise axial überdeckender relativ zu der Dichtlippe starrer Schutzrand vorgesehen, der Durchbrechungen aufweist, die wenigstens teilweise, z.B. mindestens eine Durchbrechung, umfangsmäßig versetzt zu den Luftdurchlässen der Dichtlippe angeordnet sind.

Dabei kann vorgesehen sein, dass die Durchbrechungen in Ihrer Gesamtheit einen geringeren Strömungswiderstand aufweisen als derjenige der Gesamtheit der Luftdurchlässe. Dadurch wird erreicht, dass beim Setzen des Kolbens, also beim Einbringen des Kolbens in die mit plastischer Masse gefüllte Kartusche, die Luft besser entweichen kann. Die Luft entweicht zunächst durch die Durchbrechungen, wobei auch ein Teil der plastischen Masse hinter den Schutzrand gelangen kann. Der Strömungswiderstand der Gesamtheit der Luftdurchlässe an oder in der Dichtlippe ist größer, so dass diese Luftdurchlässe nur von entweichender Luft passiert werden können, aber nicht von der Masse. Von den Durchbrechungen wird die Masse nur gebremst und von den Luftdurchlässen wird sie wegen des größeren Strömungswiderstandes daran gehindert, bis in den Bereich außerhalb des Kolbens vorzudringen.

Erfindungsgemäß kann vorgesehen sein, dass der Schutzrand einen maximalen Durchmesser aufweist, der kleiner oder gleich dem maximalen Durchmesser der Dichtlippe ist.

Bei der Kombination des erfindungsgemäßen Kartuschenkolbens mit der Kartusche, ist der Kartuschenkolben in die Kartusche einschiebbar.

Im Folgenden wird unter Bezugnahme auf die Zeichnungen ein Ausführungsbeispiel der Erfindung näher erläutert. Es zeigen:
- Fig. 1: einen Längsschnitt durch eine Kartusche mit darin befindlichem Kartuschenkolben,

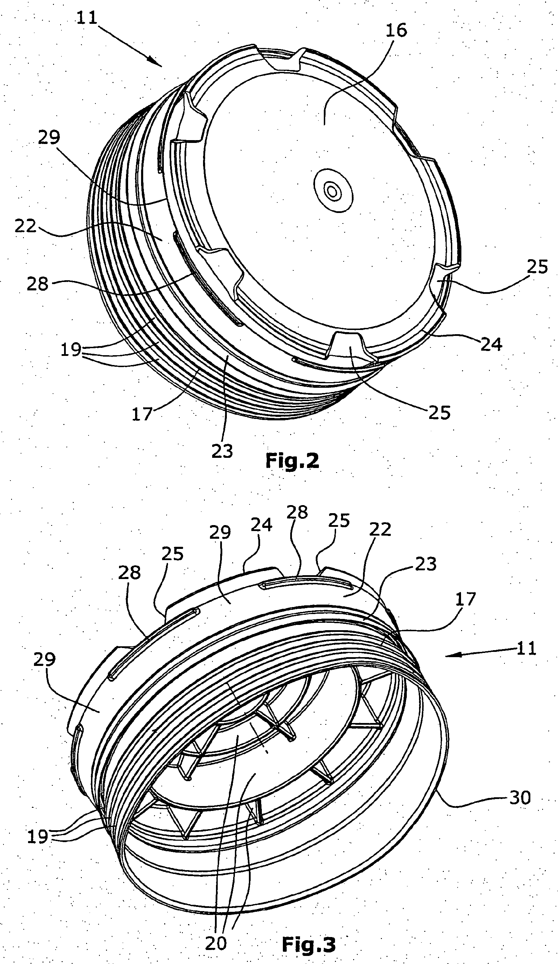

- Fig. 2: eine perspektivische Ansicht des Kolbens schräg von vorne,
- Fig. 3: eine perspektivische Ansicht des Kolbens schräg von hinten,
- Fig. 4: eine Rückansicht des Kolbens,
- Fig. 5: einen Schnitt entlang der Linie V/V von Fig. 4,
- Fig. 6: einen Längsschnitt durch den Kartuschenkolben in der Kartusche während des Setzvorganges,
- Fig. 7: die Verhältnisse von Innenfläche des Kartuschenkörpers und Außenfläche des Kolbens bei einer dreieckigen Polygonstruktur des Kolbens,
- Fig. 8: in gleicher Darstellung wie Fig. 7 eine zweieckige Polygonstruktur des Kolbens und
- Fig. 9: die gleichen Verhältnisse wie Fig. 7 bei einer eineckigen Struktur des Kolbenumfangs.

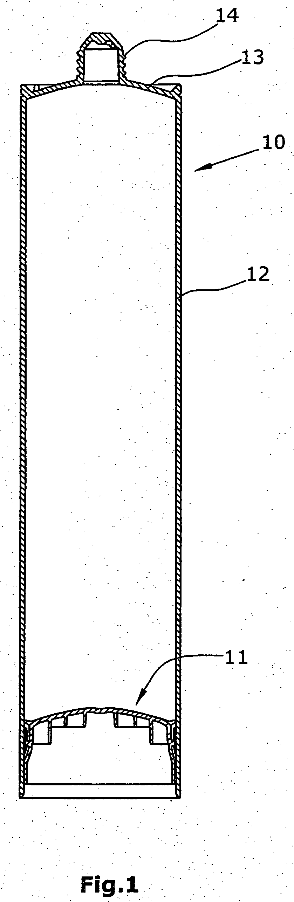

Fig. 1 zeigt die gesamte Kartusche, die aus einem einstückigen Kartuschenkörper 10 und dem ebenfalls einstückigen Kolben 11 besteht. Der Kartuschenkörper 10 weist einen zylindrischen Mantel 12 auf, der an einem Ende durch eine Stirnwand 13 mit abtrennbarer Auslasstülle 14 verschlossen ist. In das offene Ende des Kartuschenkörpers 10 ist der Kolben 11 eingeschoben. Zunächst wird der Kartuschenkörper 10 mit der (nicht dargestellten) auszupressenden Masse gefüllt und anschließend wird der Kolben 11 in das rückwärtige Ende des Kartuschenkörpers eingeschoben.

Der Kolben 11 weist eine vordere Kolbenbrust 16 und eine umlaufende Seitenwand 17 auf. Die Kolbenbrust 16 bildet die vordere Stirnwand des Kolbens. Die Seitenwand 17 ist außen mit erhabenen umlaufenden Ringen 19 versehen, die hier leicht sägezahnförmig ausgebildet sind. Die umlaufenden erhabenen Ringe 19 können beispielsweise auch als flexible Lippen ausgebildet sein. Die Ringe verhindern eine großflächige Anlage der Seitenwand 17 an der Innenwand des Kartuschenkörpers 10.

Das Innere des Kolbens 11 ist hohl. Von der Rückseite der Kolbenbrust 16 aus erstrecken sich Rippen 20 in rückwärtiger Richtung. Die rückwärtigen Enden der Rippen 20 bilden Angriffsflächen gegen die der Teller eines (nicht dargestellten) Auspresswerkzeuges drückt, das den Kolben während des Auspressvorgangs in dem Kartuschenkörper vorschiebt.

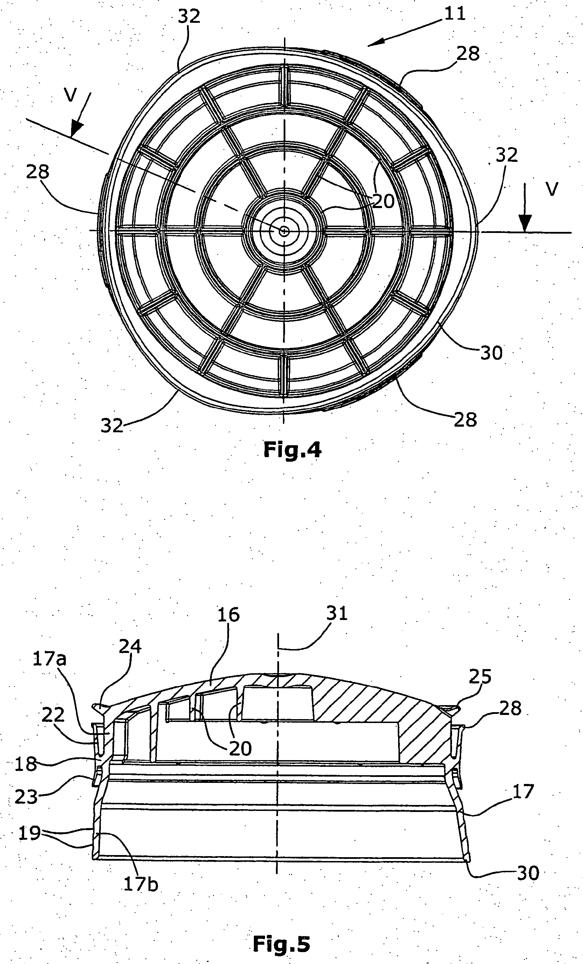

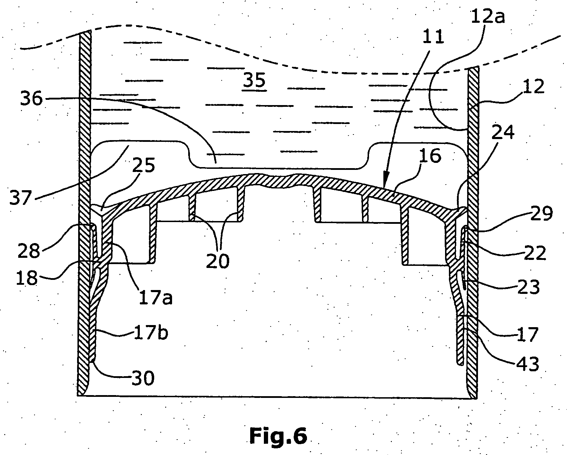

Die Seitenwand 17 weist gemäß Figuren 5 und 6 einen sich an die Kolbenbrust 16 anschließenden vorderen Bereich 17a und einen rückwärtigen Bereich 17b auf. Der Außendurchmesser des vorderen Bereichs 17a ist kleiner als derjenige des rückwärtigen Bereichs 17b. Von dem vorderen Bereich 17a steht ein Umfangssteg 18 ab, der eine nach vorne weisende vordere Dichtlippe 22 und eine rückwärtige Dichtlippe 23 trägt. Die vordere Dichtlippe 22 steht nach vorne von dem Umfangssteg 18 ab und die rückwärtige Dichtlippe 23 steht nach hinten von dem Umfangssteg ab. Die Aufgabe der vorderen Dichtlippe ist es, den Umfangsspalt zwischen Kolben und Kartuschenkörper am Ende des Setzvorgangs des Kolbens und beim Auspressen abzudichten. Die rückwärtige Dichtlippe 23 kann als Abdichtung gegen Druckluft dienen, mit welcher bei einem pneumatischen Auspresswerkzeug der Kolben vorgeschoben wird. Der hintere Bereich 17b dient zur Anlage an der Kartuschenwand. Daher ist er mit den Ringen 19 versehen. Die Wanddicke der Dichtlippen 22 und 23 ist wesentlich geringer als diejenige der anderen Wandteile des Kolbens, so dass die Dichtlippen flexibel bzw. elastisch sind.

Im Übergangsbereich zwischen der Kolbenbrust 16 und der Seitenwand 17 befindet sich ein ringförmiger Schutzrand 24, der schräg nach außen und vorne von dem vorderen Ende der Seitenwand 17 absteht. Der Schutzrand 24 ist relativ dick und starr. Er dient zum Schutz der Dichtlippen 22, 23, die er in Projektion teilweise überdeckt. In dem Schutzrand sind relativ breite und großflächige Durchbrechungen 25 vorgesehen, durch die Luft und das Füllgut an dem Schutzrand vorbeiströmen kann.

Am äußeren Ende der Dichtlippe 22 befindet sich ein umlaufender Wulstrand 28, der nach außen absteht. Der Wulstrand 28 ist an einigen Stellen des Umfanges unterbrochen bzw. nicht vorhanden. Diese Stellen bilden Luftdurchlässe 29. Die Durchbrechungen 25 des Schutzrandes 24 sind umfangsmäßig versetzt zu den Luftdurchlässen 29 der Dichtlippe 22 angeordnet.

Der rückwärtige Bereich 17b der Seitenwand 17 hat umfangsmäßig konstante Dicke. Auch die Dicke in Längsrichtung des Bereichs 17b ist mit Ausnahme der umlaufenden Ringe 19 im Wesentlichen konstant. Am rückwärtigen Ende des Bereichs 17b befindet sich ein umlaufender Rand 30. Wie Fig. 5 zeigt, ist ein Wandabschnitt der Seitenwand 17 nicht rotationssymmetrisch zu der Längsmittelachse 31 des Kolbens. Vielmehr variiert der Radiant des Wandabschnitts in Umfangsrichtung, so dass der Wandabschnitt unrund ist. Die Unrundheit erstreckt sich nicht bis in den vorderen Bereich 17a, der kreisrund ist. In dem gezeigten Ausführungsbeispiel wird der unrunde Wandabschnitt durch einen Teil des Bereichs 17b und den umlaufenden Rand 30 gebildet.

In Fig. 4 ist erkennbar, dass der unrunde Rand 30 am hinteren Ende des Kolbens polygonförmig ist, mit abgerundeten Ecken 32. Im vorliegenden Fall hat der Rand eine Dreieckskontur. An den Ecken ist der Radiant des Randes am Größten, während er zwischen den Ecken geringer ist.

Fig. 6 zeigt das Einsetzen des Kolbens 11 in den Kartuschenkörper 10, dessen Innenwand 12a zylindrisch ist, d. h. konstanten Durchmesser hat. In der Kartusche befindet sich die auspressbare Masse 35, deren rückwärtige Endfläche einen mittigen Dom 36 bildet, welcher von einem ringförmigen Graben 37 umgeben ist. Der Kolben 11 drückt mit der Kolbenbrust 16 zuerst gegen den Dom 36. Dann verteilt sich die Masse seitlich nach außen. Sie wird durch die Durchbrechungen 25 des Schutzrandes 24 gedrückt und füllt unter Verdrängung von Luft den Hohlraum zwischen dem Bereich 17a der Seitenwand und der Dichtlippe 22. Die entweichende Luft strömt durch die Luftdurchlässe 29 und dann weiter entlang der Seitenwand nach außen. Die Luftdurchlässe 29 haben in ihrer Gesamtheit einen engen Querschnitt, so dass sie von der fließfähigen Masse nicht passiert werden können. Daher bilden die Luftdurchlässe auch für die Luft einen hohen Strömungswiderstand, der zur Folge hat, dass sich ein Druck, mit dem der Spalt zwischen dem hinteren Bereich 17b und der Kartuschenwand überwunden werden könnte, nicht aufbaut.

Aus diesem Grund ist die Unrundheit des Wandabschnitts in Form des Randes 30 bzw. des hinteren Bereichs 17b des Kolbens vorgesehen. Diese Unrundheit bezieht sich auf den entspannten Kolben, auf den keine äußeren Kräfte oder Zwänge einwirken.

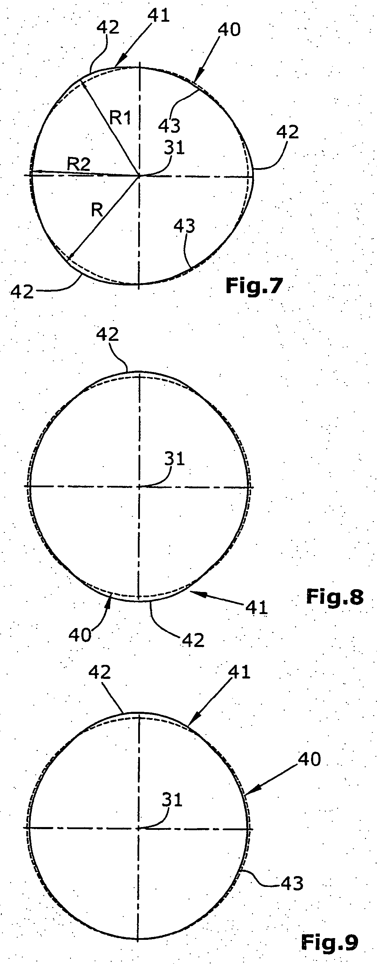

Die Unrundheit ist aus Fig. 7 zu ersehen. Dort ist der Innenkreis des Kartuschenkörpers 10 mit 40 bezeichnet. Dieser Innenkreis ist exakt kreisförmig, d. h. er hat an allen Stellen des Umfangs den gleichen Radius. Mit 41 ist die Außenkontur des Wandabschnitts der Seitenwand 17 des Kolbens 11 bezeichnet. Diese Außenkontur ist unrund. Ihr Radiant R ist an einigen Stellen größer (Radiant R1) und an anderen Stellen kleiner (Radiant R2) als der Radius des Innenkreises 40. Bei dem vorliegenden Ausführungsbeispiel bildet die Kontur 41 ein Polygon, dessen drei Ecken 42 gerundet sind. Die Ecken 42 sind durch Bereiche 43 kleineren radialen Abstandes verbunden. Die Radien an den Ecken 42 und die Radien der Bereiche 43 können so gewählt sein, dass die Abwicklung der Kontur 41 ein geringes Übermaß hat gegenüber der Abwicklung des Innenkreises 40. Da der Kolben aus Kunststoff besteht und eine gewisse Elastizität hat, passt er sich während und nach dem Einsetzen des Kolbens in den Kartuschenkörper an die Kartusche an. Während des Einsetzens bzw. Vorschiebens des Kolbens ist der Druck, den der Kolben gegen die Kartuschenwand ausübt, in den Bereichen 43 zunächst geringer als in den Eckbereichen. Der Kolben braucht beim Einsetzen in die Kartusche eine gewisse Zeit um sich rund zu stellen. Danach dichtet er sicher gegenüber der Kartuschenwand ab. Während der Zeit in der sich der Kolben einstellt, ist in den Bereichen 43 der Anpressdruck an die Kartuschenwand geringer, so dass in diesen Bereichen die verdrängte Luft besser abströmen kann, wie dies in Fig. 6 auf der rechten Seite dargestellt ist. Die durch den Kolben verdrängte Luft strömt also zunächst durch die Durchbrechungen 25 des Schutzrandes 24 und dann durch die Luftdurchlässe 29 der Dichtlippe 22, um schließlich entlang der Bereiche 43 in die Umgebung zu entweichen.

Die Erfindung bietet den Vorteil, dass entlang der Bereiche 43 Ausströmkanäle nur während der Anfangsphase des Einsetzens des Kolbens in die Kartusche entstehen. Im stationären Zustand, also wenn der Kolben in die Kartusche eingesetzt ist, dichtet der rückwärtige Bereich 17b des Kolbens sicher gegenüber dem Kartuschenkörper ab, so dass das Eindringen von Gasen in die Kartusche oder das Austreten von Gasen aus der Kartusche verhindert wird.

Während in Fig. 7 eine dreieckförmige Polygonstruktur dargestellt ist, ist in Fig. 8 eine zweieckige Polygonstruktur gewählt, bei der sich die beiden Ecken 42 diametral gegenüberliegen. Auch hier ist die Abwicklung des unrunden Wandabschnitts größer als die Abwicklung des Innenkreises 40 der Kartusche. In Fig. 9 ist ein Ausführungsbeispiel einer Struktur mit nur einer Ecke 42 dargestellt, in deren Bereich der Radius der Außenkontur 41 größer ist als der Radius des Innenkreises 40 der Kartusche. Der Bereich 43 von geringerem Radius, erstreckt sich in diesem Ausführungsbeispiel über einen großen Winkelbereich von mehr als 270°.

Für den Kolben und die Kartusche gelten vorzugsweise die folgenden Regeln:
a) Der größte Umfang des umlaufenden Wandabschnitts nach Anspruch 1 ist größer als der Umfang des Innendurchmessers der Kartusche. Dies bedeutet, dass der hintere dichtende Bereich des Kolbens an der Kartuscheninnenwand anliegen muss.
b) Der Radiant des Wandabschnitts im Bereich des größten radialen Abstandes ist kleiner als der Kartuscheninnenradius.

Die Außenkontur des hinteren Kolbenrandes ist nicht auf die dargestellten Ausführungsbeispiele beschränkt. Es ist auch nicht erforderlich, dass diese Außenkontur ein gleichseitiges Polygon bildet, obwohl dies die bevorzugte Ausführungsform darstellt.

Der Kartuschenkolben kann ganz oder teilweise aus Polyamid oder Polyolefin, beispielsweise Polyethylen oder Polypropylen hergestellt sein. Besonders bevorzugt ist die Herstellung aus Polyethylen, da dieses Material in verschiedenen Steifigkeiten bzw. Flexibilitäten verfügbar ist. Somit ist bei Verwendung eines weichen Polyethylens, das flexibler ist als das üblicherweise für Kartuschen verwendete Rohmaterial, in vorteilhafter Weise eine Anlage des Kolbens gegen die Innenfläche der Kartusche möglich.

In einem nicht dargestellten Ausführungsbeispiel der Erfindung sind die umlaufenden Ringe 19 als flexible Lippen ausgebildet und an dem unrunden Wandabschnitt angeordnet. Die flexiblen Lippen haben den Vorteil, dass sich diese leicht an die runde Formgestalt der Kartusche anpassen und somit bereits kurz nach dem Einfügen des Kartuschenkolbens in die Kartusche an der runden Kartuschenwand anliegen.

## Patentansprüche

1. Kombination eines Kartuschenkolbens mit einer Kartusche, in die der Kartuschenkolben einschiebbar ist, wobei die Kartusche einen kreisförmigen Innenquerschnitt und der Kartuschenkolben (11) einen rohrförmigen Kolbenkörper mit einer Längsmittelachse (31) aufweist, der eine umlaufende Seitenwand (17) hat und an seinem vorderen Ende mit einer Kolbenbrust (16) verschlossen ist, wobei an der Seitenwand (17) mindestens eine flexible Dichtlippe (22) vorgesehen ist,
**dadurch gekennzeichnet,**
**dass** die Seitenwand (17) des Kolbenkörpers einen umlaufenden Wandabschnitt aufweist, dessen auf die Längsmittelachse (31) bezogener Radiant in Umfangsrichtung variiert.

2. Kombination nach Anspruch 1, **dadurch gekennzeichnet, dass** der unrunde Wandabschnitt zumindest teilweise durch einen umlaufenden Rand (30) gebildet ist, wobei vorzugsweise der Rand (30) an dem rückwärtigen Ende der Seitenwand (17) angeordnet ist.

3. Kombination nach Anspruch 1 oder 2, **dadurch gekennzeichnet, dass** der unrunde Wandabschnitt von in Umfangsrichtung gleicher Wanddicke ist.

4. Kombination nach einem der Ansprüche 1 bis 3, **dadurch gekennzeichnet, dass** vor der Dichtlippe (22) ein relativ zu der Dichtlippe starrer Schutzrand (24) angeordnet ist, der mindestens eine Durchbrechung (25) aufweist.

5. Kombination nach Anspruch 4, **dadurch gekennzeichnet, dass** mehrere Durchbrechungen vorgesehen sind, wobei zumindest ein Teil der Luftdurchlässe (29) gegenüber den Durchbrechungen (25) in Umfangsrichtung versetzt angeordnet ist.

6. Kombination nach Anspruch 5, **dadurch gekennzeichnet, dass** die Durchbrechungen (25) in Ihrer Gesamtheit einen geringeren Strömungswiderstand aufweisen als derjenige der Gesamtheit der Luftdurchlässe (29).

7. Kombination nach einem der Ansprüche 4 bis 6, **dadurch gekennzeichnet, dass** der Schutzrand (24) einen maximalen Durchmesser aufweist, der kleiner oder gleich dem maximalen Durchmesser der Dichtlippe (22) ist.

8. Kombination nach einem der Ansprüche 1 bis 7, **dadurch gekennzeichnet, dass** die Luftdurchlässe (29) in einem Wulstrand (28) am Ende der Dichtlippe (22) als wulstlose Bereiche vorgesehen sind.

9. Kombination nach einem der Ansprüche 1 bis 8, **dadurch gekennzeichnet, dass** zwei flexible Dichtlippen (22, 23) von einem Umfangssteg (18) der Seitenwand (17) nach entgegengesetzten Richtungen abstehen.

10. Kombination nach einem der Ansprüche 1 bis 9, **dadurch gekennzeichnet, dass** der Wandabschnitt der Seitenwand (17) die Form eines Polygons hat.

11. Kombination nach einem der Ansprüche 1 bis 10, **dadurch gekennzeichnet, dass** die Seitenwand (17) außen erhabene umlaufende Ringe (19) aufweist, wobei vorzugsweise die erhabenen umlaufenden Ringe (19) als flexible Lippen ausgebildet sind.

12. Kombination nach Anspruch 11, **dadurch gekennzeichnet, dass** die erhabenen umlaufenden Ringe (19) an dem unrunden Wandabschnitt ausgebildet sind.

13. Kombination nach einem der Ansprüche 1 bis 12, **dadurch gekennzeichnet, dass** der auf die Längsmittelachse (31) bezogene Radiant (R) des Außenumfangs (41) des unrunden Randes (30) des Kolbens an einigen Stellen größer und an anderen Stellen kleiner ist, als der Radius des Innenumfangs (40) der Kartusche.

14. Kombination nach einem der Ansprüche 1 bis 13, **dadurch gekennzeichnet, dass** Luftdurchlässe (29) zwischen dem Ende der Dichtlippe (22) und der Kartuschenwand gebildet sind.

## Claims

1. A combination of a cartridge piston with a cartridge adapted for insertion of the cartridge piston into it, said cartridge having a circular inner cross section and the cartridge piston (11) comprising a tubular piston body having a longitudinal central axis (31), said piston body having a surrounding side wall (17) and being closed at its front end by a piston end face (16), said side wall (17) being provided with at least one flexible sealing lip (22),
**characterized in**
**that** said side wall (17) of the cartridge piston comprises a surrounding wall portion whose radiant as defined relative to the longitudinal central axis (31) is provided with variations in the circumferential direction.

2. The combination according to claim 1, **characterized in that** said non-circular wall portion is at least partially formed by a surrounding edge (30), said edge (30) being preferably arranged at the rear end of the side wall (17).

3. The combination according to claim 1 or 2, **characterized in that** said non-circular wall portion has a constant wall thickness in the circumferential direction.

4. The combination according to any one of claims 1 to 3, **characterized in that** a protective edge (24) which is relatively rigid in comparison to the sealing lip and comprises at least one cutout (25), is arranged in front of the sealing lip (22).

5. The combination according to claim 4, **characterized in that** a plurality of said cutouts are provided, at least a part of said air passages (29) being circumferentially offset relative to the cutouts (25).

6. The combination according to claim 5, **characterized in that** said cutouts (25) in their totality have a lower flow resistance than the totality of said air passages (29).

7. The combination according to any one of claims 4 to 6, **characterized in that** said protective edge (24) has a maximum diameter smaller than or equal to the maximum diameter of the sealing lip (22).

8. The combination according to any one of claims 1 to 7, **characterized in that** said air passages (29) are provided as non-beaded regions in a beaded edge (28) at the end of the sealing lip (22).

9. The combination according to any one of claims 1 to 8, **characterized in that** two flexible sealing lips (22,23) project in opposite directions from a circumferential web (18) of the side wall (17).

10. The combination according to any one of claims 1 to 9, **characterized in that** said wall portion of the side wall (17) has the shape of a polygon.

11. The combination according to any one of claims 1 to 10, **characterized in that** the side wall (17) comprises surrounding rings (19) raised toward the outside, said raised surrounding rings (19) preferably being formed as flexible lips.

12. The combination according to claim 11, **characterized in that** said raised surrounding rings (19) are formed on the non-circular wall portion.

13. The combination according to any one of claims 1 to 12, **characterized in that** the radiant (R), as defined relative to the longitudinal central axis (31), of the outer circumference (41) of the non-circular edge (30) of the piston is at certain sites larger and at other sites smaller than the radius of the inner circumference (40) of the cartridge.

14. The combination according to any one of claims 1 to 13, **characterized in that** air passages (29) are formed between the end of the sealing lip (22) and the cartridge wall.

## Revendications

1. Combinaison d'un piston de cartouche avec une cartouche dans laquelle le piston de cartouche peut être introduit, dans laquelle la cartouche présente une section transversale intérieure de forme circulaire et dans laquelle le piston de cartouche (11) présente un corps de piston de forme tubulaire, avec un axe médian longitudinal (31), qui a une paroi latérale (17) périphérique et qui est fermé à son extrémité avant par une face avant de piston (16), dans laquelle au moins une lèvre d'étanchéité (22) flexible est prévue sur la paroi latérale (17),
**caractérisée en ce que**
la paroi latérale (17) du corps de piston présente un tronçon de paroi périphérique dont le radian rapporté à l'axe médian longitudinal (31) varie dans la direction périphérique.

2. Combinaison selon la revendication 1, **caractérisée en ce que** le tronçon de paroi non circulaire est formé au moins partiellement par un bord (30) périphérique, dans laquelle le bord (30) est de préférence disposé sur l'extrémité côté arrière de la paroi latérale (17).

3. Combinaison selon la revendication 1 ou 2, **caractérisée en ce que** le tronçon de paroi non circulaire a une épaisseur de paroi identique dans la direction périphérique.

4. Combinaison selon l'une des revendications 1 à 3, **caractérisée en ce que**, devant la lèvre d'étanchéité (22), il est disposé un bord de protection (24), rigide par rapport à la lèvre d'étanchéité, qui présente au moins une découpe (25).

5. Combinaison selon la revendication 4, **caractérisée en ce qu'**il est prévu plusieurs découpes, dans laquelle au moins une partie des passages d'air (29) est disposée de façon décalée dans la direction périphérique par rapport aux découpes (25).

6. Combinaison selon la revendication 5, **caractérisée en ce que** les découpes (25) présentent dans leur totalité une résistance à l'écoulement plus faible que celle de la totalité des passages d'air (29).

7. Combinaison selon l'une des revendications 4 à 6, **caractérisée en ce que** le bord de protection (24) présente un diamètre maximal qui est inférieur ou égal au diamètre maximal de la lèvre d'étanchéité (22).

8. Combinaison selon l'une des revendications 1 à 7, **caractérisée en ce que** les passages d'air (29) sont prévus dans un bord en bourrelet (28) à l'extrémité de la lèvre d'étanchéité (22) en tant que zones sans bourrelet.

9. Combinaison selon l'une des revendications 1 à 8, **caractérisée en ce que** deux lèvres d'étanchéité (22, 23) flexibles dépassent d'une nervure périphérique (18) de la paroi latérale (17) dans des directions opposées.

10. Combinaison selon l'une des revendications 1 à 9, **caractérisée en ce que** le tronçon de paroi de la paroi latérale (17) a la forme d'un polygone.

11. Combinaison selon l'une des revendications 1 à 10, **caractérisée en ce que** la paroi latérale (17) présente des anneaux (19) périphériques en relief extérieurement, dans laquelle les anneaux (19) périphériques en relief sont constitués en tant que lèvres flexibles.

12. Combinaison selon la revendication 11, **caractérisée en ce que** les anneaux (19) périphériques en relief extérieurement sont constitués sur le tronçon de paroi non circulaire.

13. Combinaison selon l'une des revendications 1 à 12, **caractérisée en ce que** le radian (R), rapporté à l'axe médian longitudinal (31), de la périphérie extérieure (41) du bord (30) non circulaire du piston est plus grand à certains endroits, et plus petit à d'autres endroits, que le rayon de la périphérie intérieure (40) de la cartouche.

14. Combinaison selon l'une des revendications 1 à 13, **caractérisée en ce que** les passages d'air (29) sont formés entre l'extrémité de la lèvre d'étanchéité (22) et la paroi de cartouche.
